# EUROPÄISCHE PATENTSCHRIFT

(11) **EP 3 400 605 B1**
(45) Veröffentlichungstag und Bekanntmachung des Hinweises auf die Patenterteilung: **17.02.2021**
(21) Anmeldenummer: 16810413.1
(22) Anmeldetag: 16.12.2016
(51) Int. Cl.: H01H 47/22, F02D 41/20, H02H 1/06

(54) **STEUERVORRICHTUNG FÜR EINEN ELEKTROMAGNETISCHEN ANTRIEB EINES SCHALTGERÄTS**
CONTROL CIRCUIT FOR AN ELECTROMAGNETIC DRIVE OF A CONTACTOR
DISPOSITIF DE COMMANDE POUR ENTRAINEMENT ELECTROMAGNETIQUE D'UN APPAREIL DE COMMUTATION

(30) Priorität: 05.01.2016 DE 102016100188
(43) Veröffentlichungstag der Anmeldung: 14.11.2018
(73) Patentinhaber: Eaton Intelligent Power Limited, Dublin 4 (IE)
(72) Erfinder: MEID, Wolfgang, 56218 Mülheim-Kärlich (DE); SCHAAR, Ingo, 53123 Bonn (DE)
(74) Vertreter: Eaton IP Group EMEA
(86) Internationale Anmeldenummer: PCT/EP2016/081594
(87) Internationale Veröffentlichungsnummer: WO 2017/118558

(56) Entgegenhaltungen:
- EP-A2- 0 590 936
- DE-T5-112004 001 824
- DE-U1- 29 518 350
- US-A1- 2014 049 114
- US-B2- 7 005 760

## Beschreibung

Die Erfindung betrifft eine Steuervorrichtung für einen elektromagnetischen Antrieb eines Schaltgeräts, insbesondere ein Schütz, welche zur Energieversorgung des Antriebs vorgesehen ist, sowie ein Schaltgerät mit einer derartigen Steuervorrichtung.

Bisher sind Schaltgeräte wie beispielsweise Schütze für bestimmte, vorgegebene und relativ kleine Steuerspannungsbereiche ausgelegt. Beispielsweise können derzeit verfügbare Schütze mit elektronischer Ansteuerung nur einen begrenzten Steuerspannungsbereich von z.B. 110 Volt bis 240 Volt Wechsel- / Gleichspannung abdecken. Vor der Installation von Schützen muss daher entschieden werden, welche Steuerspannung verwenden werden soll. Für Servicetechniker bedeutet dies, dass unterschiedliche Schaltgeräte bzw. Schütze vorgehalten werden müssen. Zusätzlich sind mobile Anlagen nicht einfach an jedem Netz betreibbar. Wünschenswert sind daher Schaltgeräte bzw. Schütze mit einem möglichst großen Eingangs- bzw. Steuerspannungsbereich. Für ein derartiges Schaltgerät müsste die Steuervorrichtung und ein darin enthaltenes Netzteil für eine entsprechend großen Eingangs- bzw. Steuerspannungsbereich ausgelegt werden.

Ein Problem bei der Entwicklung von Netzteilen mit einem weiten Eingangsspannungsbereich verbunden mit einer hohen Ausgangsleistung besteht darin, einen geeigneten Schaltregler zu finden der einen weiten Eingangsspannungsbereich von z.B. Ucmin = 24V bis Ucmax = 250V Wechsel- / Gleichspannung verarbeiten kann. Zusätzlich zu dem Nenneingangsspannungsbereich müssen auch die erforderlichen Toleranzen mitbetrachtet werden. Dadurch vergrößert sich der effektive zu verarbeitende Eingangsspannungsbereich von ca. Umin = 12V (50% Ucmin) bis Umax = 300V (120% Ucmax). Herkömmliche Schaltregler können jedoch nur in einem kleineren Bereich die geforderte hohe Ausgangsleistung zur Verfügung stellen.

DE112004001824T5 betrifft eine elektromechanische Vorrichtung mit einer wählbaren Spulenspannung und insbesondere einen Schieber zur Wahl der Spulenspannung und zur ortsfesten Verriegelung der Spule.

US2004169422A1 betrifft ein System mit automatischen Transferschaltern (ATS), das vor allem in USV-Anlagen eingesetzt wird, um die Verbindung von Stromquellen mit einer Last zu steuern.

EP0590936A2 betrifft ein elektrisches Gerät zum Anschluss einer Last an eine 50-Hz-Stromquelle oder an eine 60-Hz-Stromquelle, insbesondere elektrische Schaltgeräte wie Leistungsschalter und Schütze mit einem digitalen Auslöser, und vor allem auf solche Geräte, die sowohl in 50-Hz- als auch in 60-Hz-Stromnetzen verwendet werden können.

DE29518350U1 betrifft eine Schaltungsanordnung mit einem über einen Schaltverstärker anzusteuernden Schütz, wobei im Speisestromkreis für die elektromagnetische Antriebsanordnung des Schützes der Ausgang des Schaltverstärkers mit der Antriebsanordnung in Reihe liegt, der Eingang des Schaltverstärkers im Steuerstromkreis des Schützes liegt und entsprechende Stromsignale im Steuerstromkreis durch Verarbeitung in einer elektromagnetischen oder elektronischen Verstärkeranordnung des Schaltverstärkers den Einschalt- bzw. Abschaltvorgang der Antriebsanordnung bewirken.

US2014/049114A1 betrifft eine Antriebsvorrichtung, insbesondere auf eine Antriebsvorrichtung, die so konfiguriert ist, dass sie ein Relais antreibt.

Aufgabe der vorliegenden Erfindung ist es nun, eine Steuervorrichtung für einen elektromagnetischen Antrieb eines Schaltgeräts, insbesondere ein Schütz, und ein Schaltgerät vorzuschlagen, welche einen möglichst großen Eingangs- bzw. Steuerspannungsbereich aufweisen.

Diese Aufgabe wird durch die Gegenstände der unabhängigen Ansprüche gelöst. Weitere Ausgestaltungen der Erfindung sind Gegenstand der abhängigen Ansprüche.

Ein der vorliegenden Erfindung zugrundeliegender Gedanke besteht darin, eine Steuervorrichtung für einen elektromagnetischen Antrieb eines Schaltgeräts mit mehreren Netzteilen auszustatten, von denen jedes in einem jeweils vorgegebenen Eingangsspannungsbereich eine zum Betreiben des elektromagnetischen Antriebs ausreichende elektrische Leistung zur Verfügung stellen kann, und automatisch abhängig von einer Eingangsspannung der Steuervorrichtung den Einsatz der Netzteile zu steuern, d.h. welche der Netzteile zum Betreiben des Antriebs eingesetzt werden. Hierbei umfasst das Betreiben des elektromagnetischen Antriebs einen Anzug- und / oder Haltebetrieb des Antriebs. Abhängig von der an der Steuervorrichtung anliegenden Eingangsspannung können also durch die Erfindung die Netzteile aktiviert werden, die eine zum Betreiben des elektromagnetischen Antriebs ausreichende elektrische Leistung in dem Eingangsspannungsbereich zur Verfügung stellen können, in dem sich die anliegende Eingangsspannung befindet. Hierdurch kann eine Steuervorrichtung geschaffen werden, die über einen weiten Eingangsspannungsbereich immer eine zum Betreiben eines elektromagnetischen Schaltgerät-Antriebs ausreichend große Leistung zur Verfügung stellen kann.

Eine Ausführungsform der Erfindung betrifft eine Steuervorrichtung für einen elektromagnetischen Antrieb eines Schaltgeräts aufweisend mehrere Netzteile, von denen jedes ausgebildet ist, in einem jeweils vorgegebenen Eingangsspannungsbereich eine zum Betreiben des elektromagnetischen Antriebs ausreichende elektrische Leistung zur Verfügung zu stellen, und wobei die Steuervorrichtung ausgebildet ist, automatisch abhängig von einer Eingangsspannung der Steuervorrichtung den Einsatz der Netzteile zum Betreiben des elektromagnetischen Antriebs zu steuern.

Die Steuervorrichtung kann eine Steuereinheit aufweisen, die ausgebildet ist, den Einsatz der Netzteile zum Betreiben des elektromagnetischen Antriebs abhängig von einer aus der Eingangsspannung der Steuervorrichtung abgeleiteten Messspannung zu steuern. Alternativ oder auch zusätzlich kann mindestens eines der Netzteile ausgebildet sein, sich abhängig von der Eingangsspannung der Steuervorrichtung selbsttätig zu aktivieren bzw. zu deaktivieren.

Insbesondere kann die Steuereinheit ausgebildet sein, für jedes der Netzteile jeweils ein An- und Abschaltsignal derart zu erzeugen, dass abhängig von der Messspannung eines oder mehrere der Netzteile über die entsprechenden An- und Abschaltsignale zum Betreiben des elektromagnetischen Antriebs aktiviert bzw. deaktiviert werden.

In der Steuervorrichtung können ein erstes Netzteil, das ausgebildet ist, in einem ersten vorgegebenen Eingangsspannungsbereich eine zum Betreiben des elektromagnetischen Antriebs ausreichende elektrische Leistung zur Verfügung zu stellen, und ein zweites Netzteil vorgesehen sein, das ausgebildet ist, in einem zweiten vorgegebenen Eingangsspannungsbereich unterhalb eines vorgegeben Spannungswertes eine zum Betreiben des elektromagnetischen Antriebs ausreichende elektrische Leistung zur Verfügung zu stellen, und die Steuereinheit kann ausgebildet sein, ein erstes An- und Abschaltsignal für das erste Netzteil derart zu erzeugen, dass das erste Netzteil aktiviert wird, wenn die Messspannung im ersten vorgegebenen Eingangsspannungsbereich liegt, und ein zweites An- und Abschaltsignal für das zweite Netzteil derart zu erzeugen, dass das zweite Netzteil aktiviert wird, wenn die Messspannung im zweiten vorgegebenen Eingangsspannungsbereich liegt.

Die Steuereinheit kann ferner ausgebildet sein, ein Steuersignal für mindestens eines der Netzteile derart zu erzeugen, dass das mindestens eine Netzteil bei Erfüllen von mindestens einer Anzugbedingung eine Anzug-Gleichspannung für den Antrieb und bei Erfüllen von mindestens einer Haltebedingung eine Halte-Gleichspannung für den Antrieb erzeugt.

Mindestens eines der Netzteile kann ein Schaltnetzteil sein. Als Netzteile können auch linear geregelte Netzteile eingesetzt werden.

Beispielsweise kann mindestens eines der Netzteile ein Schaltnetzteil sein, das für einen Eingangsspannungsbereich von etwa 24 Volt bis etwa 240 Volt Nennspannung ausgelegt ist. Ein solches Schaltnetzteil kann beispielsweise dafür vorgesehen sein, eine Halte-Gleichspannung über den Eingangsspannungsbereich von etwa 24 Volt (-50%) bis etwa 240 Volt (+20%) zu generieren. Da die Leistungsanforderungen im Haltebetrieb eines Schaltgeräte-Antriebs geringer sind als im Anzugbetrieb, kann hierfür ein entsprechend dimensioniertes Schaltnetzteil eingesetzt werden. Für den Anzugbetrieb kann dann beispielsweise ein linear geregeltes Netzteil eingesetzt werden, das die Leistungsanforderungen für den Anzugbetrieb erfüllen kann.

Um die Netzteil-Ausgänge zu entkoppeln, kann zwischen die Ausgänge der Netzteile und eine Spule des Antriebs jeweils eine Diode geschaltet sein. Hierdurch wird vermieden, dass sich die Netzteile gegenseitig beeinflussen oder stören können.

Mindestens eines der Netzteile kann ausgebildet sein, eine zum Versorgen der Steuervorrichtung geeignete Spannung zu erzeugen. Beispielsweise kann eines der Netzteile, wie oben beschrieben, ein Schaltnetzteil sein, das für den gesamten Eingangsspannungsbereich, für den das Schaltgerät, mit dem die Steuervorrichtung eingesetzt wird, eine Versorgungsspannung für die Steuervorrichtung, beispielsweise 5 Volt, erzeugt. Eine weitere Ausführungsform der Erfindung betrifft ein Schaltgerät, insbesondere Schütz, mit einem Schaltantrieb, der eine Spule aufweist, und einer Steuervorrichtung nach der Erfindung und wie hierin beschrieben zum Steuern der Stromversorgung der Spule. Das Schaltgerät kann auch einen Gleichrichter zum Erzeugen einer gleichgerichteten Ausgangsspannung aus einer Wechselspannung in einem vorgegebenen Eingangsspannungsbereich aufweisen, wobei die Ausgangsspannung den Netzteil der Steuervorrichtung zugeführt ist.

Die Steuereinheit der Steuervorrichtung kann einen Mikroprozessor oder Mikrokontroller aufweisen, der durch ein in einem Speicher abgelegtes Programm konfiguriert ist, den Einsatz der Netzteile zum Betreiben des elektromagnetischen Antriebs abhängig von einer aus einer Eingangsspannung der Steuervorrichtung abgeleiteten Messspannung zu steuern. Alternativ oder auch zusätzlich kann mindestens eines der Netzteile eine Aktivierungsschaltung aufweisen, die das mindestens eine Netzteil aktiviert, wenn eine Eingangsspannung der Steuervorrichtung in einem vorgegebenen Spannungsbereich liegt. Diese Aktivierungsschaltung kann beispielsweise als analoge und in das mindestens eine Netzteil integrierte Schaltung ausgebildet sein.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

Die Zeichnungen zeigen in
Fig. 1 ein Blockschaltbild eines ersten Ausführungsbeispiels einer Steuervorrichtung für einen elektromagnetischen Antrieb eines Schaltgeräts mit zwei Netzteilen und einer Steuereinheit gemäß der vorliegenden Erfindung; und
Fig. 2 ein Blockschaltbild eines zweiten Ausführungsbeispiels einer Steuervorrichtung für einen elektromagnetischen Antrieb eines Schaltgeräts mit zwei Netzteilen gemäß der vorliegenden Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

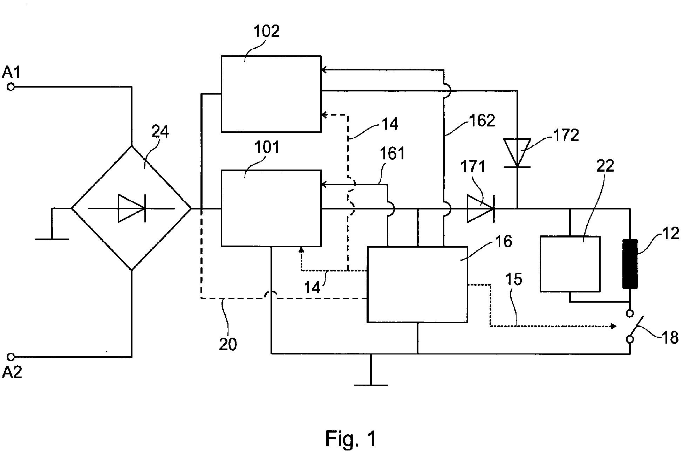

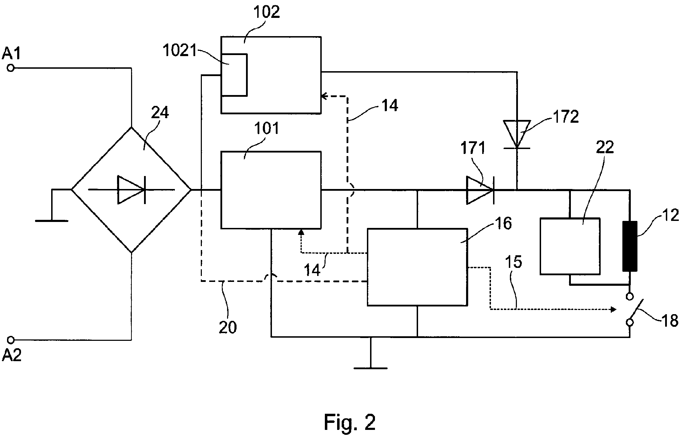

Fig. 1 und Fig. 2 zeigen Blockschaltbilder einer Steuervorrichtung bzw. Steuerelektronik gemäß der Erfindung, die prinzipiell für einen weiten Eingangsspannungsbereich beispielsweise von etwa 24 Volt bis etwa 240 Volt ausgelegt und relativ kompakt auf einer Platine implementiert werden können. Die Steuervorrichtung ist beispielsweise zur Integration in ein Schaltgerät wie ein Schütz geeignet. Sie ermöglicht es, die Energie für den Anzug- und Haltebetrieb eines elektromagnetischen Schaltgerät-Antriebs über einen weiten Eingangsspannungsbereich. der mehrere herkömmliche Eingangsspannungsbereiche für Schaltgeräte wie 24 Volt - 48 Volt, 48 Volt - 110 Volt, 110 Volt - 240 Volt Wechselspannung / Gleichspannung umfassen kann, mit zwei oder sogar mehr Netzteilen zu generieren, insbesondere ohne Einsatz von PWM (am Antrieb), wodurch das EMV-Verhalten verbessert werden kann.

Die in Fig. 1 gezeigte Steuervorrichtung umfasst ein erstes Netzteil 101, insbesondere ein Schaltnetzteil, ein zweites Netzteil 102, insbesondere ein linear geregeltes Netzteil, eine Steuereinheit 16, beispielsweise implementiert durch einen Mikrokontroller mit Speicher, eine Schnellentregungseinheit 22, einen steuerbaren Schalter 18 und zwei Dioden 171, 172 zum Entkoppeln der Netzteil-Ausgänge. Der in Fig. 1 dargestellte Gleichrichter 24 gehört streng genommen nicht zur Steuervorrichtung, kann aber dennoch auf einer Platine der Steuervorrichtung vorgesehen sein. Alle Spannungen und Signale der Steuervorrichtung sind auf ein Bezugspotential (z.B. Masse) bezogen.

Der Gleichrichter 24 wird über eine an den Anschlüssen A1 und A2 anliegende Spannung gespeist, beispielsweise eine Wechselspannung (innerhalb oder auch außerhalb der üblichen 50Hz bzw. 60Hz) oder auch eine Gleichspannung. Die vom Gleichrichter 24 aus der Spannung erzeugte Ausgangsspannung wird als Eingangsspannung dem ersten und dem zweiten Netzteil 101 bzw. 102 zugeführt.

Das erste Netzteil 101 ist insbesondere als Schaltnetzteil für einen weiten Eingangsspannungsbereich beispielsweise von etwa 24 Volt bis etwa 240 Volt ausgelegt und generiert aus einer in diesem Eingangsspannungsbereich liegenden Eingangsspannung eine Ausgangsspannung und einen Ausgangsstrom, die derart bemessen sind, dass sie eine für den Betrieb der Steuereinheit 16, einen Anzugsbetrieb und einen Haltebetrieb einer Spule 12 eines elektromagnetischen Antriebs eines (nicht dargestellten) Schaltgeräts ausreichende elektrische Leistung zur Verfügung stellen.

Das zweite Netzteil 102 ist insbesondere als linear geregeltes Netzteil für einen kleineren Eingangsspannungsbereich als das erste Netzteil 101 beispielsweise von etwa 24 Volt bis etwa 30 Volt ausgelegt und generiert aus einer in diesem Eingangsspannungsbereich liegenden Eingangsspannung eine Ausgangsspannung und einen Ausgangsstrom, die derart bemessen sind, dass sie eine für einen Anzugbetrieb der Spule 12 des elektromagnetischen Antriebs des Schaltgeräts ausreichende elektrische Leistung zur Verfügung stellen. Das zweite Netzteil 102 ist zur Unterstützung des ersten Netzteils 101 vorgesehen, da die für den Anzugbetrieb erforderliche elektrische Leistung höher als die für den Haltebetrieb erforderliche Leistung ist und ein Schaltnetzteil in der Regel nicht über einen weiten Eingangsspannungsbereich beispielsweise von etwa 24 Volt bis etwa 240 Volt eine derartige Leistung erbringen kann.

Zwischen die Ausgänge der Netzteile 101 und 102 und die Spule sind die Dioden 171 und 172 derart geschaltet, dass beide Netzteil-Ausgänge entkoppelt sind und sich die Netzteile 101 und 102 nicht gegenseitig beeinflussen und stören können, also beispielsweise Strom vom Ausgang eines Netzteils in den Ausgang des anderen Netzteils fließen kann. Durch die beiden Dioden 171 und 172 wird im Prinzip eine logische ODER-Verknüpfung der beiden Netzteil-Ausgänge erreicht.

Parallel zur Spule 12 ist die Schnellentregungseinheit 22 geschaltet. Zwischen die Spule 12 und die Masse ist der steuerbare Schalter 18 geschaltet, beispielsweise ein Schalttransistor mit entsprechender Stromtragfähigkeit und Eignung für die auftretenden Spannungen.

Der Einsatz der Netzteile 101 und 102 wird von der Steuereinheit 16 wie nachfolgend beschrieben gesteuert:
Zum Starten der Steuervorrichtung und zum Initiieren eines Schaltvorgangs des Schaltgeräts mit der Steuervorrichtung wird an die Anschlüsse A1 und A2 eine Spannung im spezifizierten, weiten Eingangsspannungsbereich beispielsweise von etwa 24 Volt bis etwa 240 Volt angelegt. Die vom Gleichrichter 24 aus der angelegten Spannung erzeugte Ausgangsspannung wird eingangsseitig den beiden Netzteilen 101 und 102 parallel zugeführt. Das erste Netzteil 101, das standardmäßig aktiviert, d.h. eingeschaltet ist, erzeugt aus der zugeführten Eingangsspannung eine Ausgangs-Gleichspannung, die zum Versorgen der Steuereinheit 16 ausreicht. Sobald die Ausgangs-Gleichspannung erzeugt ist, startet die Steuereinheit 16 die Steuerung, insbesondere indem ein die Steuereinheit 16 implementierender Mikrokontroller mit der Ausführung einer in seinem Speicher abgelegten Firmware startet.

Sobald die Steuereinheit 16 arbeitet, misst sie eine von der vom Gleichrichter 24 erzeugten Eingangsspannung der Netzteile 101 und 102 abgeleitete Messspannung 20. Beispielsweise kann die Messspannung 20 über einen Spannungsteiler aus der vom Gleichrichter 24 erzeugten Spannung abgeleitet sein, die je nach Eingangsspannung sehr hohe Werte aufweisen kann, die ggf. für eine direkte Verarbeitung durch die Steuereinheit 16 zu hoch sind.

Abhängig von der Messspannung 20 wird von der Steuereinheit 16 gesteuert, welche Netzteile zum Erzeugen der Spannungs- und Stromversorgung für die Spule 12 des Antriebs eingesetzt werden. Weiterhin steuert die Steuereinheit 16 abhängig von der Messspannung 20 das Zuschalten oder Trennen der Spule 12 des Antriebs von der Spannungsversorgung des oder der Netzteile 101, 102. Die Steuereinheit 16 erzeugt hierzu ein erstes An- und Abschaltsignal 161 zum Aktivieren bzw. Deaktivieren des ersten Netzteils 101, ein zweites An- und Abschaltsignal 162 zum Aktivieren bzw. Deaktivieren des zweiten Netzteils 102, ein Steuersignal 14 zum Umschalten des ersten und zweiten Netzteils 101 bzw. 102 derart, dass als Ausgangs-Gleichspannung entweder eine Anzug-Gleichspannung oder eine Halte-Gleichspannung, die niedriger als die Anzug-Gleichspannung ist, für den Schaltantrieb des Schaltgeräts erzeugt und ausgegeben wird, und ein zweites Steuersignal 15, um die Spule 12 über den steuerbaren Schalter 18 in den Versorgungspfad des ersten und / oder zweiten Netzteils 101 bzw. 102 schalten. Beim Starten der Steuereinheit 16 sind das erste An- und Abschaltsignal 161 aktiv, so dass das standardmäßig aktivierte erste Netzteil 101 aktiv und des Ausgangsspannung eingeschaltet bleibt und die Versorgung der Steuereinheit 16 sicherstellt, das zweite An- und Abschaltsignal 162 inaktiv, so dass das zweite Netzteil 102 inaktiv bzw. dessen Ausgangsspannung abgeschaltet ist, das Steuersignal 14 in einem Zustand, dass die Netzteile 101 und 102 eine Halte-Gleichspannung erzeugen, und das zweite Steuersignal 15 in einem Zustand, in dem der steuerbare Schalter 18 offen ist.

Die Steuerung des Einsatzes der Netzteile 101 und 102 wird nun anhand der nachfolgenden Beispiels erläutert: das erste Netzteil 101 ist als Schaltnetzteil für einen weiten Eingangsspannungsbereich von etwa 24 Volt bis etwa 240 Volt ausgelegt und kann ab einer Eingangsspannung > 30 Volt eine für den Anzug- und Haltebetrieb des elektromagnetischen Antriebs ausreichende elektrische Leistung zur Verfügung stellen. Das zweite Netzteil 102 ist als linear geregeltes Netzteil für einen Eingangsspannungsbereich von etwa 24 Volt bis etwa 30 Volt ausgelegt und kann in diesem Eingangsspannungsbereich eine für den Anzugbetrieb des elektromagnetischen Antriebs ausreichende Leistung zur Verfügung stellen.

Die Steuereinheit 16 überwacht nun die Messspannung 20, bis diese eine stabilen, nahezu konstanten Wert erreicht und vergleicht dann diesen erreichten, nahezu konstanten Wert mit einem vorgegebenen, einer Eingangsspannung von etwa 30 Volt entsprechenden Schwellwert. Ergibt der Vergleich, dass der Wert unter dem Schwellwert liegt, generiert die Steuereinheit 16 das zweite An- und Abschaltsignal 162 derart, dass das zweite Netzteil 102 aktiviert wird. Liegt der Wert über dem Schwellwert, lässt die Steuereinheit 16 das zweite An- und Abschaltsignal 162 derart eingestellt, dass das zweite Netzteil 102 deaktiviert bleibt.

Liegen die Einschaltbedingungen für das Schaltgerät im Sollbereich (z.B. > 85% 24V), erzeugt die Steuereinheit 16 nun das zweite Steuersignal 15 derart, dass der steuerbare Schalter 18 geschlossen wird, wodurch die Spule 12 mit der Masse verbunden und damit von der Anzug-Gleichspannung des Netzteils 101 und / oder 102 versorgt werden kann, so dass ein entsprechender Anzugstrom durch die Spule 12 fließt und der Antrieb des Schaltgeräts zum Schließen der Schaltkontakte bewegt wird.

In der Steuereinheit 16 wird ein Timer gestartet, der eine vorgegebene Zeit nach dem Erzeugen des Steuersignals 15 nach schließen des Schalters 18 läuft. Die vorgegebene Zeit ist hierbei abhängig vom Schaltantrieb und der Dauer derart bemessen, dass er die Zeit bis zum Schließen der Schaltkontakte des Schaltgeräts umfasst (entspricht typischerweise etwa der Anzugzeit des Schaltantriebs).

Wenn der Timer und damit die durch ihn vorgegebene Zeit abgelaufen sind, ist eine Haltebedingung erfüllt.

Falls das zweite Netzteil 102 während des Anzugvorgangs aktiviert war, erzeugt die Steuereinheit 16 das zweite An- und Abschaltsignal 162 derart, dass das zweite Netzteil 102 deaktiviert wird. Weiterhin erzeugt die Steuereinheit 16 das Steuersignal 14 derart, dass das erste Netzteil 101 durch das Steuersignal 14 in einen Modus geschaltet wird, in dem es nun als Ausgangs-Gleichspannung eine Halte-Gleichspannung für den Schaltantrieb des Schaltgeräts erzeugt und ausgibt, die niedriger als die Anzug-Gleichspannung ist. Praktisch senkt hierbei das Netzteil 10 seine Ausgangs-Gleichspannung auf die Halte-Gleichspannung ab und gibt nun die Halte-Gleichspannung solange aus, solange eine Spannung im spezifizierten Eingangsspannungsbereich an den Anschlüssen A1 und A2 anliegt und die Schaltkontakte des Schaltgeräts geschlossen bleiben sollen.

Abhängig vom elektromagnetischen Antrieb und dessen Parametern kann das zweite Netzteil 102 auch während des Haltevorgangs aktiviert bleiben (beispielsweise wenn der Antrieb eine elektrische Leistung im Haltebetrieb benötigt, welche das erste Netzteil 101 nicht zur Verfügung stellen kann). In diesem Fall kann das zweite Netzteil 102 ebenso wie das erste Netzteil 101 über das Steuersignal 14 in den Modus zum Erzeugen einer Halte-Gleichspannung geschaltet werden.

Wird die Spannung an den Anschlüssen A1 und A2 abgeschaltet oder sinkt sie unter eine vorgegebene Mindestspannung, was von der Steuereinheit 16 über die Messspannung 20 detektiert werden kann, schaltet die Steuereinheit 16 den Schaltantrieb ab, indem sie das zweite Steuersignal 15 so erzeugt und ausgibt, dass der steuerbare Schalter 18 geöffnet wird. Nach dem Öffnen des Schalters 18 wird automatisch die Schnellentregung 22 aktiv, über welche die in der Spule 12 gespeicherte Energie entladen wird.

Fig. 2 zeigt ein Blockschaltbild eines Ausführungsbeispiels der Steuervorrichtung, bei der nicht die Steuereinheit 16 die beiden Netzteile 101 und 102 in Abhängigkeit der gemessenen Eingangsspannung zu- oder abschaltet, sondern sich das zweite Netzteil 102 selbsttätig abhängig von der Eingangsspannung aktiviert oder deaktiviert. Hierzu ist in das zweite Netzteil 102 eine analoge Schaltung 1021 integriert, die abhängig von der eingangsseitig am zweiten Netzteil 102 anliegenden Spannung, also der Eingangsspannung, das zweite Netzteil 102 aktiviert, so dass dieses eine Ausgangsspannung erzeugt. Die analoge Schaltung 1021 kann das zweite Netzteil 102 beispielsweise bei einer Eingangsspannung < 30 Volt aktivieren, und es deaktivieren, sobald die Eingangsspannung > 30 Volt ist. Das erste Netzteil 101 ist hierbei immer aktiv geschaltet und wird nur über das Steuersignal 14 vom Anzug- in den Halte-Modus geschaltet. Wenn beide Netzteile 101 und 102 aktiviert sind, beispielsweise bei einer Eingangsspannung < 30 Volt, erfolgt eine Zu- oder Abschaltung der jeweiligen Ausgangsspannung der Netzteile 101 und 102 mittels einer durch die beiden Dioden 171 und 172 realisierten ODER Verknüpfung. Das Netzteil, welches momentan die höhere Ausgangsspannung in Abhängigkeit der Eingangsspannung zur Verfügung stellt, liefert hierbei die Spannung für beispielsweise den Anzugsvorgang des Schaltgerätes.

Die vorliegende Erfindung ermöglicht eine nahezu beliebige Verschaltung von mehreren Netzteilen, um eine für den Betrieb eines elektromagnetischen Antriebs eines Schaltgeräts erforderliche elektrische Leistung über einen möglichst großen Eingangsspannungsbereich von insbesondere etwa 24 Volt bis etwa 240 Volt Wechsel- / Gleichspannung zur Verfügung stellen zu können. Dadurch wird die Möglichkeit der Implementierung eines Multispannungs-Schaltgeräts geschaffen. Weitere Vorteile der vorliegenden Erfindung bestehen in einer Vereinfachung der Schaltung der Steuervorrichtung und einer damit in der Regel einhergehenden Robustheit, einer möglichen Minimierung der Schaltungsvarianten sowie einer Verbesserung des EMV-Verhaltens. Weiterhin sind Vorteile der Erfindung darin zu sehen, dass die Spulentypen des elektromagnetischen Antriebs eines Schaltgeräts reduziert werden können, da nicht mehr für jeden Eingangsspannungsbereich eine eigene Spule verwendet werden muss, sondern eine Spule für mehrere Eingangsspannungsvarianten verwendet werden kann, die Anzahl der Bauteile reduziert werden kann, und ein kompakterer Aufbau ermöglicht wird, der zu kleineren Luft- und Kriechstrecken und damit einem verbesserten EMV-Verhalten führt sowie einen geringeren Platzbedarf aufweist.

## Patentansprüche

1. Steuervorrichtung für einen elektromagnetischen Antrieb eines Schaltgeräts aufweisend
• mehrere Netzteile (101, 102), von denen jedes ausgebildet ist, in einem jeweils vorgegebenen Eingangsspannungsbereich eine zum Betreiben des elektromagnetischen Antriebs (12) ausreichende elektrische Leistung zur Verfügung zu stellen, **dadurch gekennzeichnet, dass** die Steuervorrichtung ausgebildet ist, automatisch abhängig von einer Eingangsspannung der Steuervorrichtung den Einsatz der Netzteile (101, 102) zum Betreiben des elektromagnetischen Antriebs (12) zu steuern, wobei abhängig von der Eingangsspannung die Netzteile (101, 102) aktiviert werden, welche die zum Betreiben des elektromagnetischen Antriebs ausreichende elektrische Leistung in dem Eingangsspannungsbereich zur Verfügung stellen können, in dem sich die Eingangsspannung befindet.

2. Steuervorrichtung nach Anspruch 1,
**dadurch gekennzeichnet, dass**
• sie eine Steuereinheit (16) aufweist, die ausgebildet ist, den Einsatz der Netzteile (101, 102) zum Betreiben des elektromagnetischen Antriebs (12) abhängig von einer aus der Eingangsspannung der Steuervorrichtung abgeleiteten Messspannung (20) zu steuern und / oder
• mindestens eines der Netzteile (102) ausgebildet ist, sich abhängig von der Eingangsspannung der Steuervorrichtung selbsttätig zu aktivieren bzw. zu deaktivieren.

3. Steuervorrichtung nach Anspruch 2,
**dadurch gekennzeichnet, dass**
die Steuereinheit (16) ausgebildet ist, für jedes der Netzteile (101, 102) jeweils ein An- und Abschaltsignal (161, 162) derart zu erzeugen, dass abhängig von der Messspannung (20) eines oder mehrere der Netzteile (101, 102) über die entsprechenden An- und Abschaltsignale (161, 162) zum Betreiben des elektromagnetischen Antriebs (12) aktiviert bzw. deaktiviert werden.

4. Steuervorrichtung nach Anspruch 2 oder 3,
**dadurch gekennzeichnet, dass**
ein erstes Netzteil (101), das ausgebildet ist, in einem ersten vorgegebenen Eingangsspannungsbereich eine zum Betreiben des elektromagnetischen Antriebs (12) ausreichende elektrische Leistung zur Verfügung zu stellen, und
ein zweites Netzteil (102) vorgesehen ist, das ausgebildet ist, in einem zweiten vorgegebenen Eingangsspannungsbereich unterhalb eines vorgegeben Spannungswertes eine zum Betreiben des elektromagnetischen Antriebs (12) ausreichende elektrische Leistung zur Verfügung zu stellen,
wobei die Steuereinheit (16) ausgebildet ist, ein erstes An- und Abschaltsignal (161) für das erste Netzteil (101) derart zu erzeugen, dass das erste Netzteil (101) aktiviert wird, wenn die Messspannung (20) im ersten vorgegebenen Eingangsspannungsbereich liegt, und ein zweites An- und Abschaltsignal (162) für das zweite Netzteil (102) derart zu erzeugen, dass das zweite Netzteil (102) aktiviert wird, wenn die Messspannung (20) im zweiten vorgegebenen Eingangsspannungsbereich liegt.

5. Steuervorrichtung nach einem der Ansprüche 2 bis 4,
**dadurch gekennzeichnet, dass**
die Steuereinheit (16) ferner ausgebildet ist, ein Steuersignal (14) für mindestens eines der Netzteile (101, 102) derart zu erzeugen, dass das mindestens eine Netzteil (101, 102) bei Erfüllen von mindestens einer Anzugbedingung eine Anzug-Gleichspannung für den Antrieb (12) und bei Erfüllen von mindestens einer Haltebedingung eine Halte-Gleichspannung für den Antrieb (12) erzeugt.

6. Steuervorrichtung nach einem der vorhergehenden Ansprüche,
**dadurch gekennzeichnet, dass**
mindestens eines der Netzteile ein Schaltnetzteil (101) ist, das insbesondere für einen Eingangsspannungsbereich von etwa 24 Volt bis etwa 240 Volt ausgelegt ist.

7. Steuervorrichtung nach einem der vorhergehenden Ansprüche,
**dadurch gekennzeichnet, dass**
zwischen die Ausgänge der Netzteile (101, 102) und eine Spule (12) des Antriebs jeweils eine Diode (171, 172) zum Entkoppeln der Netzteil-Ausgänge geschaltet ist.

8. Steuervorrichtung nach einem der vorhergehenden Ansprüche,
**dadurch gekennzeichnet, dass**
mindestens eines der Netzteile (101) ausgebildet ist, eine zum Versorgen der Steuervorrichtung geeignete Spannung zu erzeugen.

9. Schaltgerät, insbesondere Schütz, mit
- einem Schaltantrieb, der eine Spule (12) aufweist, und
- einer Steuervorrichtung (101, 102, 16) nach einem der vorhergehenden Ansprüche zum Steuern der Stromversorgung der Spule (12).

10. Schaltgerät nach Anspruch 9, **dadurch gekennzeichnet, dass** die Steuereinheit (16) der Steuervorrichtung einen Mikroprozessor oder Mikrokontroller aufweist, der durch ein in einem Speicher abgelegtes Programm konfiguriert ist, den Einsatz der Netzteile (101, 102) zum Betreiben des elektromagnetischen Antriebs (12) abhängig von einer aus einer Eingangsspannung der Steuervorrichtung abgeleiteten Messspannung (20) zu steuern, und / oder mindestens eines der Netzteile (102) eine Aktivierungsschaltung (1021) aufweist, die das mindestens eine Netzteil (102) aktiviert, wenn eine Eingangsspannung der Steuervorrichtung in einem vorgegebenen Spannungsbereich liegt.

## Claims

1. Control device for an electromagnetic drive of a switchgear, comprising:
- a plurality of power supply units (101, 102), each of which being configured to provide, in a respective specified input voltage range electrical power that is sufficient for operating the electromagnetic drive (12),
**characterised in that**
the control device is configured to automatically control the use of the power supply units (101, 102) for operating the electromagnetic drive (12) on the basis of an input voltage of the control device, wherein the power supply units (101, 102) are activated depending on the input voltage, which can provide the electric power sufficient for operating the electromagnetic drive in the input voltage range, in which the input voltage is set.

2. Control device according to claim 1,
**characterised in that**
- it comprises a control unit (16), which is configured to control the use of the power supply units (101, 102) for operating the electromagnetic drive (12) on the basis of a measuring voltage (20) derived from the input voltage of the control device, and/or
- at least one of the power supply units (102) is configured to be automatically self-activating or self-deactivating on the basis of the input voltage of the control device.

3. Control device according to claim 2,
**characterised in that**
the control unit (16) is configured to generate a turn-on and turn-off signal (161, 162) for each of the power supply units (101, 102) such that one or more of the power supply units (101, 102) are activated or deactivated by the corresponding turn-on and turn-off signals (161, 162) on the basis of the measuring voltage (20) in order to operate the electromagnetic drive (12).

4. Control device according to claim 2 or 3,
**characterised in that**
a first power supply unit (101), which is configured, in a first prespecified input voltage range, to provide electrical power that is sufficient for operating the electromagnetic drive (12), and
a second power supply unit (102) is provided which is configured, in a second prespecified input voltage range below a prespecified voltage value, to provide electrical power that is sufficient for operating the electromagnetic drive (12),
wherein the control unit (16) is configured to generate a first turn-on and turn-off signal (161) for the first power supply unit (101) such that the first power supply unit (101) is activated when the measuring voltage (20) is in the first prespecified input voltage range, and to generate a second turn-on and turn-off signal (162) for the second power supply unit (102) such that the second power supply unit (102) is activated when the measuring voltage (20) is in the second prespecified input voltage range.

5. Control device according to any of claims 2 to 4,
**characterised in that**
the control unit (16) is further configured to generate a control signal (14) for at least one of the power supply units (101, 102) such that the at least one power supply unit (101, 102) generates a pick-up DC voltage for the drive (12) based upon at least one pick-up condition being met, and generates a holding DC voltage for the drive (12) based upon at least one holding condition being met.

6. Control device according to any of the preceding claims,
**characterised in that**
at least one of the power supply units is a switched-mode power supply unit (101) that is configured in particular for an input voltage range of approximately 24 volts to approximately 240 volts.

7. Control device according to any of the preceding claims,
**characterised in that**
in order to decouple the power supply unit outputs, a diode (171, 172) is connected respectively between the outputs of the power supply units (101, 102) and a coil (12) of the drive.

8. Control device according to any of the preceding claims,
**characterised in that**
at least one of the power supply units (101) is configured to generate a voltage that is suitable for supplying power to the control device.

9. Switchgear, in particular contactor, comprising:
- a switching drive that has a coil (12) and
- a control device (101 102, 16) according to any of the preceding claims for controlling the power supply of the coil (12).

10. Switchgear according to claim 9, **characterised in that** the control unit (16) of the control device comprises a microprocessor or microcontroller which is configured by a program saved in a memory to control the use of the power supply units (101, 102) for operating the electromagnetic drive (12) on the basis of a measuring voltage (20) derived from an input voltage of the control device, and/or at least one of the power supply units (102) has an activating circuit (1021) that activates the at least one power supply unit (102) when an input voltage of the control device is in a prespecified voltage range.

## Revendications

1. Dispositif de commande pour un entraînement électromagnétique d'un appareil de commutation présentant
- plusieurs blocs d'alimentation (101, 102) dont chacun est configuré pour mettre à disposition une puissance électrique suffisante pour faire fonctionner l'entraînement électromagnétique (12) dans une plage de tension d'entrée prédéfinie respective, **caractérisé en ce que** le dispositif de commande est configuré pour commander la mise en action des blocs d'alimentation (101, 102) de manière automatique, en fonction d'une tension d'entrée du dispositif de commande, pour faire fonctionner l'entraînement électromagnétique (12), dans lequel, en fonction de la tension d'entrée, les blocs d'alimentation (101, 102) sont activés, lesquels peuvent mettre à disposition la puissance électrique suffisante pour faire fonctionner l'entraînement électromagnétique dans la plage de tension d'entrée, dans laquelle la tension d'entrée se trouve.

2. Dispositif de commande selon la revendication 1,
**caractérisé en ce que**
- il présente une unité de commande (16) qui est configurée pour commander la mise en action des blocs d'alimentation (101, 102) pour faire fonctionner l'entraînement électromagnétique (12) en fonction d'une tension de mesure (20) dérivée de la tension d'entrée du dispositif de commande, et / ou
- au moins un des blocs d'alimentation (102) est configuré pour s'activer ou se désactiver automatiquement en fonction de la tension d'entrée du dispositif de commande.

3. Dispositif de commande selon la revendication 2,
**caractérisé en ce que**
l'unité de commande (16) est configurée pour produire respectivement un signal de connexion et de déconnexion (161, 162) pour chacun des blocs d'alimentation (101, 102) de telle façon que, en fonction de la tension de mesure (20), un ou plusieurs des blocs d'alimentation (101, 102) soient activés ou désactivés par l'intermédiaire des signaux de connexion et de déconnexion (161, 162) correspondants pour faire fonctionner l'entraînement électromagnétique (12).

4. Dispositif de commande selon la revendication 2 ou 3,
**caractérisé en ce que**
un premier bloc d'alimentation (101), qui est configuré pour mettre à disposition, dans une première plage de tension d'entrée prédéfinie, une puissance électrique suffisante pour faire fonctionner l'entraînement électromagnétique (12), et
un second bloc d'alimentation (102) est prévu, qui est configuré pour mettre à disposition, dans une seconde plage de tension d'entrée prédéfinie inférieure à une valeur de tension prédéfinie, une puissance électrique suffisante pour faire fonctionner l'entraînement électromagnétique (12),
dans lequel l'unité de commande (16) est configurée pour produire un premier signal de connexion et de déconnexion (161) pour le premier bloc d'alimentation (101) de telle façon que le premier bloc d'alimentation (101) soit activé lorsque la tension de mesure (20) se situe dans la première plage de tension d'entrée prédéfinie, et pour produire un second signal de connexion et de déconnexion (162) pour le second bloc d'alimentation (102) de telle façon que le second bloc d'alimentation (102) soit activé lorsque la tension de mesure (20) se situe dans la seconde plage de tension d'entrée prédéfinie.

5. Dispositif de commande selon l'une quelconque des revendications 2 à 4,
**caractérisé en ce que**
l'unité de commande (16) est en outre configurée pour produire un signal de commande (14) pour au moins un des blocs d'alimentation (101, 102) de telle façon que le au moins un bloc d'alimentation (101, 102) produise, lorsqu'au moins une condition d'actionnement est satisfaite, une tension continue d'actionnement pour l'entraînement (12) et, lorsqu'au moins une condition d'arrêt est satisfaite, une tension continue d'arrêt pour l'entraînement (12).

6. Dispositif de commande selon l'une quelconque des revendications précédentes,
**caractérisé en ce que**
au moins un des blocs d'alimentation est un bloc d'alimentation en mode commuté (101), qui est conçu en particulier pour une plage de tension d'entrée s'étendant d'environ 24 volts à environ 240 volts.

7. Dispositif de commande selon l'une quelconque des revendications précédentes,
**caractérisé en ce que**
entre les sorties des blocs d'alimentation (101, 102) et une bobine (12) de l'entraînement, respectivement une diode (171, 172) est connectée pour découpler les sorties de bloc d'alimentation.

8. Dispositif de commande selon l'une quelconque des revendications précédentes,
**caractérisé en ce que**
au moins un des blocs d'alimentation (101) est configuré pour produire une tension appropriée pour alimenter le dispositif de commande.

9. Appareil de commutation, en particulier un contacteur électromagnétique, avec
- un mécanisme de commutation qui présente une bobine (12), et
- un dispositif de commande (101, 102, 16) selon l'une quelconque des revendications précédentes pour commander l'alimentation en courant de la bobine (12).

10. Appareil de commutation selon la revendication 9, **caractérisé en ce que** l'unité de commande (16) du dispositif de commande présente un microprocesseur ou un microcontrôleur qui est configuré par un programme mémorisé dans une mémoire pour commander la mise en action des blocs d'alimentation (101, 102) pour faire fonctionner l'entraînement électromagnétique (12) en fonction d'une tension de mesure (20) dérivée d'une tension d'entrée du dispositif de commande, et/ou au moins un des blocs d'alimentation (102) présente un circuit d'activation (1021) qui active le au moins un bloc d'alimentation (102) lorsqu'une tension d'entrée du dispositif de commande se situe dans une plage de tension prédéfinie.
